# FASCICULE DE BREVET EUROPEEN

(11) **EP 0 730 633 B1**
(45) Date de publication et mention de la délivrance du brevet: **14.10.1998**
(21) Numéro de dépôt: 95902163.5
(22) Date de dépôt: 22.11.1994
(51) Int. Cl.: C11D 11/00

(54) **PROCEDE DE LAVAGE DE BOUTEILLES EN PLASTIQUES RE-REMPLISSABLES**
WASCHVERFAHREN FÜR KUNSTSTOFFMEHRWEGFLASCHEN
PROCESS FOR WASHING REFILLABLE PLASTIC BOTTLES

(30) Priorité: 22.11.1993 FR 9313927
(43) Date de publication de la demande: 11.09.1996
(73) Titulaire: PERNOD-RICARD, 75008 Paris (FR)
(72) Inventeur: ROBICHON, Patrice, F-78400 CHATOU (FR)
(74) Mandataire: Schrimpf, Robert
(86) Numéro de dépôt international: FR9401361
(87) Numéro de publication internationale: WO9514761

(56) Documents cités:
- EP-A- 0 479 393
- WO-A-91/17236
- WO-A-94/01268
- US-A- 4 680 060
- DATABASE WPI Section Ch, Week 8402, Derwent Publications Ltd., London, GB; Class A35, AN 84-011756 & ZA,A,8 207 598 (HALL A R M) 21 Juillet 1983
- DATABASE WPI Section Ch, Week 9326, Derwent Publications Ltd., London, GB; Class A23, AN 93-208695 & JP,A,5 132 041 (TOYO SEIKAN KAISHA LTD) 28 Mai 1993
- DATABASE WPI Section Ch, Week 9403, Derwent Publications Ltd., London, GB; Class A23, AN 94-022552 & JP,A,5 330 535 (NISSEI ASB KIKAI KK) 14 Décembre 1993

## Description

La présente invention concerne le domaine des bouteilles en plastiques re-remplissables, notamment pour usage alimentaire.

Les bouteilles en plastique utilisées notamment pour le conditionnement des boissons gazeuses sont en majorité constituées de polyéthylène téréphtalate (ci-après PET).

Par rapport à d'autres plastiques (en particulier PVC), le PET présente d'excellentes qualités de brillance et de transparence, et par rapport au verre il a l'avantage de la légèreté et de la résistance mécanique, c'est pourquoi il est très utilisé pour les grands contenants.

Il possède de bonnes propriétés mécaniques et il offre une bonne résistance chimique aux huiles, graisses et à la plupart des solvants et solutions organiques, aux solutions de sels minéraux et aux hydrocarbures.

Grâce au bi-étirage, le PET voit sa résistance aux chocs se multiplier par 10 et son module d'élasticité par 4.

En outre, son imperméabilité aux gaz est remarquable, notamment au gaz carbonique et à l'oxygène, d'où son utilisation très importante pour les boissons carbonatées.

Ces qualités font que le PET s'est imposé comme le conditionnement de référence pour les grands contenants à usage unique.

Toutefois, il existe de nombreux pays où les grands contenants re-remplissables occupent une place prépondérante, que ce soit pour des raisons législatives et écologiques (Europe du Nord), ou pour des raisons économiques (Amérique du Sud). C'est pourquoi en 1990, de nouvelles bouteilles ont fait leur apparition en Allemagne, il s'agit de bouteilles en PET re-remplissables. Ces bouteilles viennent en remplacement du verre consigné pour les mêmes raisons qui ont fait le succès du PET à usage unique, à savoir la résistance et légèreté.

Les bouteilles re-remplissables actuellement utilisées sont fabriquées en PET selon le procécé en deux étapes classique.

Ce procédé en deux étapes dissocie l'injection de préforme en PET amorphe et le bi-étirage de la préforme pour l'obtention du contenant final.

Dans la première étape les préformes sont injectées sur une presse munie d'un sécheur et d'un moule multi-empreintes. Les préformes peuvent être stockées, transportées au point de soufflage de la bouteille finale.

Dans la deuxième étape, la préforme en PET amorphe est reprise, réchauffée à la température optimale puis bi-étirée dans le sens longitudinal mécaniquement par un piston métallique et dans un sens transversal par soufflage haute pression.

Ce procédé donne lieu à deux gammes de machines industrielles :
- des presses d'injection de préformes jusqu'à 96 empreintes, et
- des souffleuses bi-orientation jusqu'à 40 000 bouteilles/heure.

Ce procédé représente environ 80 % des bouteilles en PET fabriquées dans le monde, qu'elles soient re-remplissables ou non.

Toutefois, même après bi-étirage, les bouteilles PET ne présentent pas des propriétés mécaniques ni même chimiques (comme on le verra ci-après) leur permettant d'être réutilisées.

Pour obtenir une résistance mécanique suffisante, l'épaisseur des parois doit être augmentée, ce qui revient, pour obtenir des bouteilles en plastique re-remplissables, à doubler leur poids.

Les bouteilles à usage unique pèsent en général de l'ordre de 48 g pour une bouteille de 1,5 1, contre environ 100 g pour les bouteilles re-remplissables.

En outre, ces bouteilles re-remplissables étant fabriquées selon une technologie classique, elles doivent être lavées à une température inférieure à 60°C, au-delà de cette température elles se rétractent beaucoup trop et peuvent se déformer.

Mais ces conditions de lavage à une température inférieure à 60°C ne permettent pas toujours de se débarrasser de certains composés organiques qui se fixent par absorption physique ou chimique sur les parois intérieures des bouteilles, notamment lorsque celles-ci ont été utilisées pour stocker des produits non-alimentaires.

C'est pourquoi, dans les chaînes de lavage de ces bouteilles en PET il est nécessaire de prévoir des renifleurs (sniffer) qui effectuent des prélèvements dans chaque bouteille pour analyser la présence possible d'un certain nombre d'agents contaminants afin de rejeter les bouteilles contaminées.

La nécessité de ces contrôles très précis conduit souvent à rejeter un grand nombre de bouteilles re-remplissables et diminue par là même le nombre de cycles de chaque bouteille, ceci en plus des bouteilles rejetées pour des défauts mécaniques , notamment les craquelures, ce qui au total abaisse évidemment notablement la rentabilité du processus de réutilisation.

Ainsi, il était prévu aux origines que les bouteilles en PET re-remplissables devaient résister de 15 à 25 cycles, 15 cycles étant l'objectif minimum, alors que dans la réalité on observe que le nombre moyen de cycles effectués pour une bouteille est bien inférieur à 15, on parle pour certaines bouteilles de 6-7 cycles, ce qui est évidemment très insuffisant.

Différents organismes se sont préoccupés du problème des bouteilles en plastique re-remplissables, ceci afin d'établir des codes de bonnes pratiques pour les sociétés utilisant les bouteilles en plastique re-remplissables et afin de mieux connaître les propriétés de ces bouteilles lorsqu'elles sont contaminées par des substances étrangères.

C'est le cas notamment du TNO (The Netherlands Organisation for Nutrition and Food Research) et également des recherches qui sont conduites dans le cadre de l'international Life Science Institute sur ce même type de produit.

Pour l'instant, les solutions proposées consistent essentiellement à modifier les protocoles de lavage de façon à améliorer la décontamination, à utiliser des renifleurs plus performants et éventuellement à rechercher de nouveaux polymères ou alliages de polymères qui pourraient permettre d'obtenir des bouteilles re-remplissables, lavables dans de meilleures conditions.

Le document EP-A-479 393 décrit des contenants transparents de type bouteille en polyéthylène téréphtalate présentant un taux de cristallinité compris entre 24 et 30 %. Ces contenants peuvent être lavés par une solution de lavage caustique jusqu'à une température de 60°C. Le document WO-A-94/01268 déposé sous priorité du 7 Juillet 1992 et du 30 juin 1993, a été publié le 20 janvier 1994. Ce document décrit aux figures 2 et 3 un conteneur tricouche formé d'une couche de coeur 30, d'une couche externe 34 et d'une couche interne 32 en polyester, notamment le polyéthylène térephtalate (cf. pages 26 et 27 de la demande de brevet). Comme indiqué sur la figure 2 en liaison avec les pages 14 et 15, la cristallinité des différentes couches est en tout état de cause inférieure à 25 %.

La présente invention repose sur la mise en évidence d'une propriété de certains polyesters aromatiques qui est de résister à la fixation des composés organiques contaminants possibles des bouteilles en plastique, ladite propriété s'accompagnant, en outre, pour ces plastiques d'une résistance satisfaisante à des conditions de lavage drastiques.

La présente invention repose sur la mise en oeuvre d'un procédé permettant d'augmenter la résistance des polyesters aromatiques, notamment le PET, à la fixation des composés organiques dans lequel on traite ledit polyester pour augmenter sa cristallinité au-delà de 30 % et de préférence au-delà de 40 %.

L'augmentation de la cristallinité s'accompagne d'une augmentation de la température de transition vitreuse dudit polyester.

Selon l'invention, les polyesters aromatiques présenteront avantageusement une température de transition vitreuse supérieure ou égale à 90°C en augmentant la cristallinité et en pratiquant un étirage des polyesters.

Il existe déjà des procédés permettant d'augmenter la cristallinité, grâce à un relâchement des contraintes par un recuit, notamment du PET, au-delà de 30 % et même au-delà de 40 %, parmi ces procédés on peut citer notamment le procédé dit SRF ou SRCF développés par la société SIDEL et qui fait l'objet notamment des brevets numéros EP 0 237 459, FR 2 649 035 et FR 2 658 119.

Le recuit peut être effectué par différentes technologies, notamment par la technologie du moule chaud ou par ramollissement du produit bi-étiré.

Le procédé SRCF est un mode de réalisation particulier du procédé général dans lequel, pour augmenter la cristallinité des polyesters aromatiques, le polyester sous forme polymérisé est d'abord bi-étiré, puis ramolli de façon à relacher les contraintes induites par le bi-étirage puis, seulement alors, amené à la forme définitive.

Le procédé SRCF, qui est dérivé du procédé froid ou procédé en deux étapes, part d'une préforme fabriquée sur une presse indépendante. La suite du procédé comprend 4 étapes :
1°) on chauffe le corps de la préforme,
2°) on souffle avec bi-orientation une première bouteille surdimensionnée,
3°) on passe cette bouteille dans un four à infrarouge dit "four de recouvrance", il se produit deux choses, d'une part la bague est cristallisée et devient blanche, d'autre part, sous l'effet de la température, 200°C pendant environ 1 minute 30, le corps de la bouteille se rétracte : les contraintes induites lors des étapes de bi-étirage se sont relachées, la bouteille prend alors une forme de "patatoïde", la densité du PET composant le corps de l'article a fortement augmenté, le PET est désormais cristallisé, il est devenu résistant à la chaleur,
4°) on finit alors l'article par un second soufflage avec bi-orientation, la bouteille trouvant alors sa forme définitive.

Le procédé SRF antérieur ne comportait pas le chauffage dans un four à infrarouge, la bague était cristallisée avant le réchauffage de la préforme.

Ce procédé a déjà été utilisé de façon à améliorer la résistance à la chaleur des bouteilles à usage unique, ceci afin de permettre le remplissage à chaud avec un produit plat ou la pasteurisation en bouteille d'un produit carbonaté.

Il n'a jamais été fait mention du fait que ce procédé augmentait la résistance du polymère à la fixation par adsorption physique ou chimique des produits organiques, notamment des principaux contaminants, que l'on peut trouver dans des bouteilles re-remplissables qui ont été utilisées pour stocker des produits ménagers ou autres.

C'est pourquoi, la présente invention concerne également un procédé de lavage d'un contenant notamment à usage alimentaire de type bouteille et destiné à être réutilisé notamment pour un usage alimentaire, caractérisé en ce que :
- on utilise un contenant réalisé en un homopolymère ou un copolymère, ou un mélange de polymères, transparent, ayant un taux de cristallinité moyen supérieur à 30 %, l'épaisseur des parois du contenant étant supérieure à:
   - 0,35 mm pour le corps
   - 1,00 mm à la base
   - 1,00 mm au fond, et
- on lave ledit contenant avec une solution aqueuse à une température supérieure à 70°C.

Les contenants utilisés dans ce procédé présentent la caractéristique de pouvoir être lavés dans des conditions voisines des conditions utilisées pour le verre et lesdits contenants étant plus épais que les bouteilles non réutilisables présentent des caractéristiques mécaniques leur assurant un re-remplissage dans de bonnes conditions.

En particulier, ce type de contenant peut être lavé avec une solution aqueuse contenant une base, notamment un hydroxyde à des concentrations pouvant varier de 1 à 3 % en présence d'un agent mouillant et ce, éventuellement, à des températures supérieures à 80°C, pouvant atteindre 85°C, températures et conditions utilisées habituellement pour les conditionnements en verre. Le lavage peut être avantageusement précédé d'un prélavage par de l'eau chaude adoucie à une température d'environ 60°C (avantageusement 55 - 65°C), sous pression (2 à 5 bars).

Après lavage, les bouteilles sont rincées, de préférence à l'eau chaude, éventuellement adoucie, avantageusement à une température inférieure à 30°C environ.

Le contenant est de préférence réalisé en polymère ou un copolymère de type polyester, ou un mélange de tels polymères, il s'agit en particulier de polyesters linéaires d'un diacide aromatique et d'un diol.

Parmi les polymères utilisables il faut citer les polymères obtenus avec :
- l'acide téréphtalique
- l'acide naphtalique
- le téréphtalate de diméthyle
- l'acide isophtalique
- l'isophtalate de diméthyle par condensation avec les diols tels que :
- l'éthylène glycol
- le 1,4-cyclohexane diméthanol.

Parmi les différents polymères ou copolymères possibles, il faut citer tout particulièrement le PET ainsi que le copolymère polynaphtalate d'éthylène glycol, de même que les mélanges de ces deux copolymères.

Selon une variante avantageuse, on peut citer un mélange de PET avec 5 à 15 % en poids de polynaphtalate d'éthylène glycol.

Dans ce procédé, on préférera utiliser des bouteilles à parois relativement épaisses tout en gardant les avantages de poids liés à l'utilisation des bouteilles en matière plastique, notamment le contenant pourra avoir des épaisseurs supérieures à:
- 0,4 mm pour le corps (voire même supérieure à 0,5 mm)
- 1,25 mm pour la base (voire même supérieure à 1,7 mm)
- 1,90 mm pour le fond (voire même supérieure à 2,5 mm)

Afin d'assurer une répartition égale des contraintes induites par le lavage à chaud, on préférera utiliser des contenants ayant des épaisseurs sensiblement égales pour le corps et la base et utiliser, par exemple, un contenant présentant un fond sensiblement hémisphérique en mettant en oeuvre alors une technologie connue de fond collé pour permettre le maintien vertical de la bouteille.

Mais, le fond peut être autostable ou pétaloïde.

Le contenant est de préférence monobloc en ce sens que les parois sont homogènes.

La présente invention concerne de préférence des contenants comportant une étiquette décollable dans les conditions de lavage, ceci de façon à pouvoir tout à la fois laver le contenant à l'intérieur et à l'extérieur lors du recyclage.

De préférence, le contenant selon la présente invention est obtenu par la mise en oeuvre de l'un des procédés décrits précédemment.

La présente invention concerne également les contenants destinés à être lavés par le procédé précédemment décrit.

D'autres caractéristiques et avantages de la présente invention apparaîtront à la lecture de l'exemple ci-après.

### EXEMPLE

On a testé deux types de bouteilles présentant des pourcentages de cristallinité inférieurs à 10 % et supérieurs à 40 %.

Le premier type de bouteilles est obtenu par des techniques classiques en deux étapes avec contrôle de la cristallinité. Les bouteilles ayant un taux de cristallinité supérieur à 40 % sont obtenues par le procédé SRCF mentionné précédemment.

Les contaminants utilisés sont :
- le méthyl-parathion dilué à 0,4 g/l,
   (ce composé étant celui qui pose le problème principal de décontamination selon les analyses TNO), et
- l'essence super 98 sans plomb (pur),
   (ce composé étant le plus souvent stocké dans ce type de récipient).

Le contaminant est stocké 48 heures dans la bouteille avant le lavage.

La solution de lavage utilisée est une solution de NaOH à 1,5 % avec un détergent P3 Stabilon liquide à 0,3 %.

On effectue :
- un prérinçage par injection d'eau chaude pendant 2 minutes,
- puis un lavage à 60 ou 80°C avec la solution de lavage pendant 10 minutes,
- enfin, on rince par injection d'eau chaude pendant 2 minutes et injection d'eau froide pendant 2 minutes.

Les résultats observés sont les suivants :

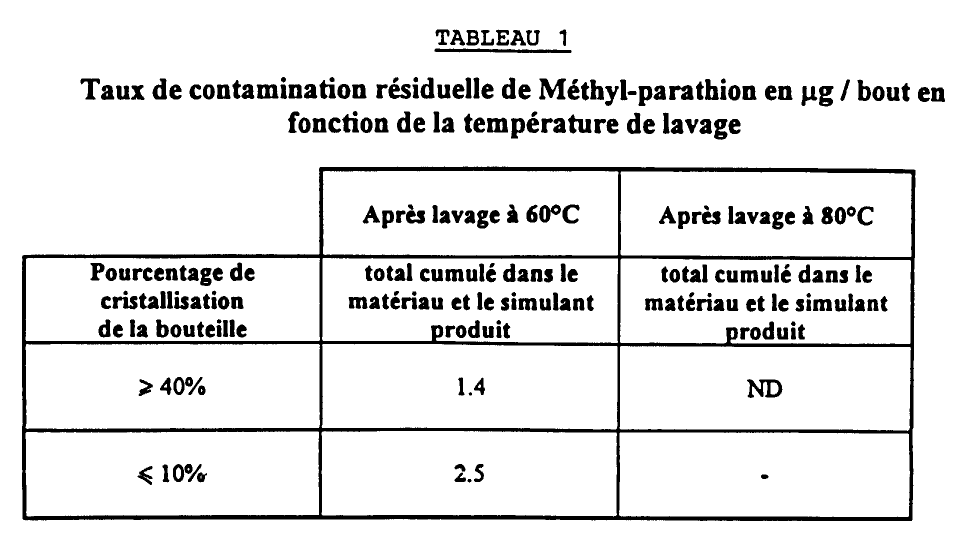

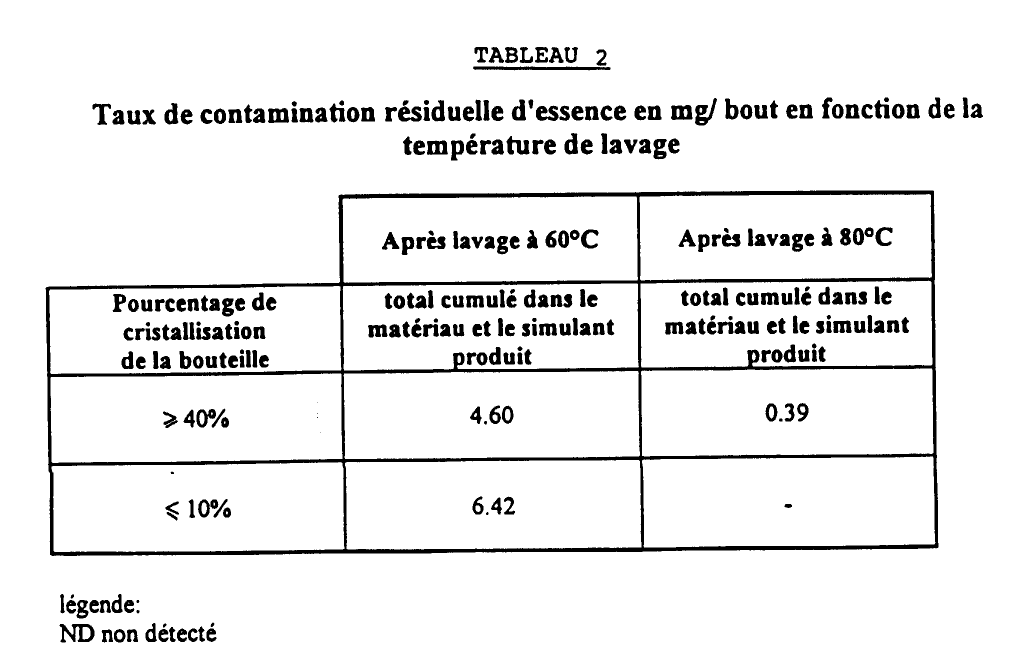

On constate dans le tableau 1 qu'à 60°C les bouteilles selon l'invention présentent près de 50 % de contaminants en moins par rapport aux bouteilles réutilisables traditionnelles.

Dans le tableau 2, on constate de même une diminution de 30 % de la contamination pour les bouteilles selon l'invention par rapport aux bouteilles réutilisables traditionnelles lavées à 60°C.

Mais, bien entendu, les bouteilles selon l'invention résistant à la température, peuvent être lavées à 80°C, ce qui n'est pas le cas des bouteilles traditionnelles. Dans ce cas là, la contamination résiduelle (après lavage à 80°C) est diminué de 91 % par rapport au lavage à 60°C et de 94 % par rapport aux bouteilles traditionnelles (tableau 2).

Dans le tableau 1, la contamination résiduelle des bouteilles selon l'invention (lavées à 80°C) est inférieure au seuil de détection.

## Revendications

1. Procédé de lavage d'un contenant, notamment à usage alimentaire de type bouteille et destiné à être réutilisé, notamment pour un usage alimentaire, caractérisé en ce que :
- on utilise un contenant réalisé en un homopolymère ou un copolymère ou mélange desdits polymères, transparent, ayant un taux de cristallinité moyen supérieur à 30 %, l'épaisseur des parois du contenant étant supérieure à:
- 0,35 mm pour le corps
- 1,00 mm à la base
- 1,00 mm au fond, et
- on lave ledit contenant avec une solution aqueuse à une température supérieure à 70°C.

2. Procédé selon la revendication 1, caractérisé en ce que la solution aqueuse contient une base et un agent mouillant.

3. Procédé selon la revendication 2, caractérié en ce que la solution aqueuse est une solution a au moins 1 % en poids d'un hydroxyde.

4. Procédé selon l'une des revendications 1 à 3, caractérisé en ce que la température est supérieure à 80°C.

5. Procédé selon l'une des revendications 1 à 4, caractérisé en ce que le polymère est un polyester.

6. Procédé selon l'une des revendications 1 à 5, caractérisé en ce que le contenant est réalisé en un homopolymère ou un copolymère ou mélange desdits polymères linéaires, d'un diacide aromatique et d'un diol.

7. Procédé selon la revendication 6, caractérisé en ce que le contenant est réalisé en un homopolymère ou un copolymère ou un mélange desdits polymères d'acide téréphtalique ou d'un acide naphtalique et d'éthylène glycol.

8. Procédé selon la revendication 7, caractérisé en ce le que contenant est un homopolymère ou un copolymère polytéréphtalate d'éthylène glycol ou polynaphtalate d'éthylène glycol ou leurs mélanges.

9. Procédé selon la revendication 8, caractérisé en ce que le contenant est un mélange de polytéréphtalate d'éthylène glycol avec 5 à 15 % en poids de polynaphtalate d'éthylène glycol.

10. Procédé selon l'une des revendications 1 à 9, caractérisé en ce que le taux de cristallinité moyen est supérieur à 40 %.

11. Procédé selon la revendication 10, caractérisé en ce que la température de transition vitreuse est supérieure ou égale à 90°C.

12. Procédé selon l'une des revendications 1 à 11, caractérisé en ce que le contenant est ensuite rincé à l'eau adoucie dont la température est inférieure à environ 30°C.

13. Procédé selon l'une des revendications 8 à 11, caractérisé en ce que le contenant a une épaisseur supérieure à:
- 0,4 mm pour le corps
- 1,25 mm pour la base
- 1,90 mm pour le fond.

14. Procédé selon l'une des revendications 1 à 13, caractérisé en ce que le contenant présente un fond sensiblement hémisphérique, autostable ou pétaloïde.

15. Procédé selon l'une des revendications 1 à 14, caractérisé en ce que le contenant comporte une étiquette décollable dans les conditions de lavage.

16. Procédé selon l'une des revendications 1 à 15, caractérisé en ce que le contenant est obtenu à partir d'une préforme par au moins une étape de bi-étirage, puis, après un recuit pour relâcher les tensions induites, mis à la forme finale avec un taux de cristallinité supérieur à 30 %

17. Procédé selon la revendication 16, caractérisé en ce que le recuit est obtenu par la technologie du moule chaud.

18. Procédé selon la revendication 16, caractérisé en ce que le recuit est obtenu par ramollissement du produit bi-étiré.

19. Procédé selon l'une des revendications 1 à 18, caractérisé en ce que l'épaisseur du contenant est sensiblement uniforme sur le corps et la base.

20. Contenant destiné à être utilisé dans le procédé selon l'une des revendications 1 à 19, caractérisé en ce qu'il est réalisé en un copolymère ou mélange de copolymères de type polyester de type transparent ayant un taux de cristallinité moyen supérieur à 40 %, l'épaisseur des parois du contenant étant supérieure à:
- 0,35 mm pour le corps
- 1,00 mm à la base
- 1,00 mm au fond.

21. Contenant selon la revendication 20, caractérisé en ce qu'il est réalisé en polyester aromatique présentant une résistance augmentée à la fixation des composés organiques et obtenu par traitement du polyester pour augmenter sa cristallinité au-delà de 40 %.

22. Contenant selon la revendications 21, caractérisé en ce que le polyester sous forme polymérisée est d'abord bi-étiré puis, après recuit pour relâcher les contraintes induites, est amené à la forme finale.

23. Contenant selon la revendication 22, caractérisé en ce que le polyester est recuit par la technologie du moule chaud.

24. Contenant selon la revendication 23, caractérisé en ce que le polyester est recuit par ramollissement du produit bi-étiré.

25. Utilisation d'un contenant pour la mise en oeuvre d'un procédé selon l'une des revendications 1 à 19, caractérisée en ce que ledit contenant est réalisé en un copolymère ou mélange de copolymères de type polyester de type transparent ayant un taux de cristalinité moyen supérieur à 30 %, l'épaisseur des parois du contenant étant supérieure à:
- 0,35 mm pour le corps
- 1,00 mm à la base
- 1,00 mm au fond.

26. Utilisation selon la revendication 25, caractérisée en ce que le contenant est réalisé en polyester aromatique présentant une résistance augmentée à la fixation des composés organiques et obtenu par traitement du polyester pour augmenter sa cristallinité au-delà de 30 %.

27. Utilisation selon la revendication 26, caractérisée en ce qu'on traite ledit polyester pour augmenter sa cristallinité au-delà de 40 %.

28. Utilisation selon l'une des revendications 26 ou 27, caractérisée en ce que le polyester sous forme polymérisée est d'abord bi-étiré puis, après recuit pour relâcher les contraintes induites, est amené à la forme finale.

29. Utilisation selon la revendication 28, caractérisée en ce que le polyester est recuit par la technologie du moule chaud.

30. Utilisation selon la revendication 28, caractérisée en ce que le polyester est recuit par ramollissement du produit bi-étiré.

31. Utilisation des polyesters aromatiques pour résister à la fixation des composés organiques, notamment contaminants, caractérisée en ce que lesdits polyesters aromatiques ont un taux de cristallinité moyen supérieur à 30 %.

32. Utilisation selon la revendication 31, caractérisée en ce que lesdits polyesters aromatiques ont un taux de cristallinité moyen supérieur à 40%.

33. Utilisation selon l'une des revendications 31 ou 32, caractérisée en ce que les polyesters aromatiques sous forme polymérisée sont d'abord bi-étirés puis, après recuit, pour relâcher les contraintes induites, sont amenés à la forme finale.

34. Utilisation selon la revendication 33, caractérisée en ce que les polyesters sont recuits par la technologie du moule chaud.

35. Utilisation selon la revendication 33, caractérisée en ce que les polyesters aromatiques sont recuits par ramollissement du produit bi-étiré. 36) Utilisation selon l'une des revendications 31 à 35, caractérisée en ce que le polyester aromatique est le polyéthylène téréphtalate.

## Patentansprüche

1. Waschverfahren für einen Behälter, insbesondere für eine zur Wiederverwendung bestimmte Lebensmittelflasche, besonders für Lebensmitteleinsatz, dadurch gekennzeichnet, daß:
- ein Behälter verwendet wird, der aus einem Homopolymer oder einem Copolymer oder einer Mischung der genannten Polymere besteht, transparent ist und einen mittleren Kristallinitätsgrad über 30 % aufweist, wobei die Dicke der Behälterwände mehr beträgt als:
- 0,35 mm am Körper
- 1,00 mm am Unterteil
- 1,00 mm am Boden und
der genannte Behälter mit einer wäßrigen Lösung bei einer Temperatur über 70 °C gewaschen wird.

2. Verfahren nach Anspruch 1, dadurch gekennzeichnet, daß die wäßrige Lösung eine Base und ein Netzmittel enthält.

3. Verfahren nach Anspruch 2, dadurch gekennzeichnet, daß die wäßrige Lösung eine Lösung mit wenigstens 1 Gew.-% eines Hydroxids ist.

4. Verfahren nach einem der Ansprüche 1 bis 3, dadurch gekennzeichnet, daß die Temperatur über 80 °C beträgt.

5. Verfahren nach einem der Ansprüche 1 bis 4, dadurch gekennzeichnet, daß das Polymer ein Polyester ist.

6. Verfahren nach einem der Ansprüche 1 bis 5, dadurch gekennzeichnet, daß der Behälter aus einem Homopolymer oder einem Copolymer oder einer Mischung der genannten linearen Polymere, einer aromatischen zweibasischen Säure und einem Diol hergestellt ist.

7. Verfahren nach Anspruch 6, dadurch gekennzeichnet, daß der Behälter aus einem homopolymer oder einem Copolymer oder einer Mischung der genannten Terephthalsäurepolymere oder einer Naphthalsäure und Ethylenglykol hergestellt ist.

8. Verfahren nach Anspruch 7, dadurch gekennzeichnet, daß der Behälter ein Homopolymer oder ein Ethylenglykolpolyterephthalat- oder Ethylenglykolpolynaphthalatcopolymer oder eine ihrer Mischungen ist.

9. Verfahren nach Anspruch 8, dadurch gekennzeichnet, daß der Behälter eine Mischung von Ethylenglykolpolyterephthalat mit 5 bis 15 Gew.-% Ethylenglykolpolynaphthalat ist.

10. Verfahren nach einem der Ansprüche 1 bis 9, dadurch gekennzeichnet, daß der mittlere Kristallinitätsgrad über 40 % beträgt.

11. Verfahren nach Anspruch 10, dadurch gekennzeichnet, daß die Glasumwandlungstemperatur mindestens 90 °C beträgt.

12. Verfahren nach einem der Ansprüche 1 bis 11, dadurch gekennzeichnet, daß der Behälter anschließend mit enthärtetem Wasser, dessen Temperatur unter ca. 30 °C liegt, gespült wird.

13. Verfahren nach einem der Ansprüche 8 bis 11, dadurch gekennzeichnet, daß der Behälter eine Dicke von mehr als:
- 0,4 mm am Körper
- 1,25 mm am Unterteil
- 1,90 mm am Boden
aufweist.

14. Verfahren nach einem der Ansprüche 1 bis 13, dadurch gekennzeichnet, daß der Behälter einen im wesentlichen halbkugelförmigen, eigenstabilen oder blattförmigen Boden aufweist.

15. Verfahren nach einem der Ansprüche 1 bis 14, dadurch gekennzeichnet, daß der Behälter ein unter Waschbedingungen abziehbares Etikett aufweist.

16. Verfahren nach einem der Ansprüche 1 bis 15, dadurch gekennzeichnet, daß der Behälter aus einem Vorformling mittels wenigstens einer Doppelziehstufe hergestellt wird und dann, nach einem Glühvorgang zur Beseitigung der induzierten Spannungen, seine endgültige Form mit einem Kristallinitätsgrad über 30 % erhält.

17. Verfahren nach Anspruch 16, dadurch gekennzeichnet, daß das Glühen mittels Warmformtechnik bewirkt wird.

18. Verfahren nach Anspruch 16, dadurch gekennzeichnet, daß das Glühen durch Erweichung des doppelt gezogenen Produkts bewirkt wird.

19. Verfahren nach einem der Ansprüche 1 bis 18, dadurch gekennzeichnet, daß die Dicke des Behälters am Körper und am Unterteil im wesentlichen gleichmäßig ist.

20. Behälter für den Einsatz bei dem Verfahren nach einem der Ansprüche 1 bis 19, dadurch gekennzeichnet, daß er aus einem Copolymer oder einer Mischung von transparenten Polyester-Copolymeren mit einem mittleren Kristallinitätsgrad über 40 % hergestellt wird, wobei die Dicke der Behälterwände größer ist als:
- 0,35 mm am Körper
- 1,00 mm am Unterteil
- 1,00 mm am Boden

21. Behälter nach Anspruch 20, dadurch gekennzeichnet, daß er aus aromatischem Polyester hergestellt ist, der einen erhöhten Widerstand gegen die Fixierung organischer Verbindungen aufweist, und durch Behandlung des Polyesters zur Erhöhung seiner Kristallinität auf über 40 % erzielt wird.

22. Behälter nach Anspruch 21, dadurch gekennzeichnet, daß der Polyester in polymerisierter Form zunächst doppelt gezogen wird und dann, nach einem Glühvorgang zur Beseitigung der induzierten Spannungen, seine endgültige Form erhält.

23. Behälter nach Anspruch 22, dadurch gekennzeichnet, daß der Polyester mittels Warmformtechnik geglüht wird.

24. Behälter nach Anspruch 23, dadurch gekennzeichnet, daß der Polyester durch Erweichung des doppelt gezogenen Produkts geglüht wird.

25. Verwendung eines Behälters für die Anwendung eines Verfahrens nach einem der Ansprüche 1 bis 19, dadurch gekennzeichnet, daß der genannte Behälter aus einem Copolymer oder einer Mischung von transparenten Polyester-Copolymeren mit einem mittleren Kristallinitätsgrad von mehr als 30 % hergestellt ist, wobei die Dicke der Behälterwände mehr beträgt als:
- 0,35 mm am Körper
- 1,00 mm am Unterteil
- 1,00 mm am Boden

26. Verwendung nach Anspruch 25, dadurch gekennzeichnet, daß der Behälter aus einem aromatischen Polyester hergestellt ist, der einen erhöhten Widerstand gegen die Fixierung organischer Verbindungen aufweist, und durch Behandlung des Polyesters zur Erhöhung seiner Kristallinität auf über 30 % erzielt wird.

27. Verwendung nach Anspruch 26, dadurch gekennzeichnet, daß der genannte Polyester so behandelt wird, daß seine Kristallinität auf über 40 % erhöht wird.

28. Verwendung nach einem der Ansprüche 26 oder 27, dadurch gekennzeichnet, daß der Polyester in polymerisierter Form zunächst doppelt gezogen wird und dann, nach einem Glühvorgang zur Beseitigung der induzierten Spannungen, seine endgültige Form erhält.

29. Verwendung nach Anspruch 28, dadurch gekennzeichnet, daß der Polyester mittels Warmformtechnik geglüht wird.

30. Verwendung nach Anspruch 26, dadurch gekennzeichnet, daß der Polyester durch Erweichung des doppelt gezogenen Produkts geglüht wird.

31. Verwendung der aromatischen Polyester mit Beständigkeit gegen die Fixierung organischer Verbindungen, insbesondere von Schmutzstoffen, dadurch gekennzeichnet, daß die genannten aromatischen Polyester einen mittleren Kristallinitätsgrad von mehr als 30 % aufweisen.

32. Verwendung nach Anspruch 31, dadurch gekennzeichnet, daß die genannten aromatischen Polyester einen mittleren Kristallinitätsgrad über 40 % aufweisen.

33. Verwendung nach einem der Ansprüche 31 oder 32, dadurch gekennzeichnet, daß die aromatischen Polyester in polymerisierter Form zunächst doppelt gezogen werden und dann, nach dem Glühvorgang zur Beseitigung der induzierten Spannungen, ihre endgültige Form erhalten.

34. Verwendung nach Anspruch 33, dadurch gekennzeichnet, daß die Polyester mittels Warmformtechnik geglüht werden.

35. Verwendung nach Anspruch 33, dadurch gekennzeichnet, daß die aromatischen Polyester durch Erweichung des doppelt gezogenen Produkts geglüht werden.

36. Verwendung nach einem der Ansprüche 31 bis 35, dadurch gekennzeichnet, daß der aromatische Polyester Polyethylenterephthalat ist.

## Claims

1. Process for washing a container, especially a food or drink container, of the bottle type and intended to be reused, especially for a use with foodstuffs, characterized in that:
- the reusable container is made of a homopolymer or a copolymer or a mixture of the said polymers, which is transparent and which has an average degree of crystallinity higher than 30 %, the thickness of the walls of the container being greater than:
- 0.35 mm with regard to the body
- 1.00 mm at the base
- 1.00 mm at the bottom, and
- the said container is washed with an aqueous solution at a temperature higher than 70°C.

2. Process according to Claim 1, characterized in that the aqueous solution contains a base and a wetting agent.

3. Process according to Claim 2, characterized in that the aqueous solution is a solution with at least 1 % by weight of hydroxide.

4. Process according to one of Claims 1 to 3, characterized in that the temperature is higher than 80°C.

5. Process according to one of Claims 1 to 4, characterized in that the polymer is a polyester.

6. Process according to one of Claims 1 to 5, characterized in that the container is made of a homopolymer or a copolymer or a mixture of the said linear polymers, of an aromatic diacid and of a diol.

7. Process according to Claim 6, characterized in that the container is made of a homopolymer or a copolymer or a mixture of the said polymers of terepthalic acid or a naphthalic acid and of ethylene glycol.

8. Process according to Claim 7, characterized in that the container is a homopolymer or a copolymer of polyethylene glycol terephthalate or polyethylene glycol naphthalate or mixtures thereof.

9. Process according to Claim 8, characterized in that the container is a mixture of polyethylene glycol terephthalate with 5 to 15 % by weight of polyethylene glycol naphthylate.

10. Process according to one of Claims 1 to 9, characterized in that the average degree of crystallinity is higher than 40 %.

11. Process according to Claim 10, characterized in that the glass transition temperature is greater than or equal to 90°C.

12. Process according to one of Claims 1 to 11, characterized in that the container is subsequently rinsed with softened water whose temperature is less than approximately 30°C.

13. Process according to one of Claims 8 to 11, characterized in that the container has a thickness greater than:
- 0.4 mm with regard to the body
- 1.25 mm with regard to the base
- 1.90 mm with regard to the bottom.

14. Process according to one of Claims 1 to 13, characterized in that the container has a substantially hemispherical, self-stable or petaloid bottom.

15. Process according to one of Claims 1 to 14, characterized in that the container comprises a label which can be unstuck under the washing conditions.

16. Process according to one of Claims 1 to 15, characterized in that the container is obtained from a preform by at least one biaxial stretching stage and then, after an annealing to release the stresses induced, given the final shape with a degree of crystallinity of higher than 30 %.

17. Process according to Claim 16, characterized in that the annealing is obtained by the hot mould technique.

18. Process according to Claim 16, characterized in that the annealing is obtained by softening the biaxially stretched product.

19. Process according to one of Claims 1 to 18, characterized in that the thickness of the container is substantially uniform over the body and the base.

20. Container intended to be employed in the process according to one of Claims 1 to 19, characterized in that it is made of a copolymer or mixture of copolymers of polyester type of transparent type which has an average degree of crystallinity of higher than 40 %, the thickness of the walls of the container being greater than:
- 0.35 mm with regard to the body
- 1.00 mm with regard to the base
- 1.00 mm with regard to the bottom

21. Container according to Claim 20, characterized in that it is made of aromatic polyester which possesses increased resistance to the binding of organic compounds and is obtained by treating the polyester in order to increase its crystallinity above 40%.

22. Container according to Claim 21, characterized in that the polyester in polymerized form is first of all biaxially stretched and then, after annealing to release the stresses induced, is given the final shape.

23. Container according to Claim 22, characterized in that the polyester is annealed by the hot mould technique.

24. Container according to Claim 23, characterized in that the polyester is annealed by softening the biaxially stretched product.

25. Use of a container for the implementation of a process according to one of Claims 1 to 19, characterized in that the said container is made of a copolymer or mixture of copolymers of polyester type of transparent type which has an average degree of crystallinity of higher than 30%, the thickness of the walls of the container being greater than:
- 0.35 mm with regard to the body
- 1.00 mm with regard to the base
- 1.00 mm with regard to the bottom

26. Use according to Claim 25, characterized in that the container is made of aromatic polyester which possesses increased resistance to the binding of organic compounds and is obtained by treating the polyester in order to increase its crystallinity above 30%.

27. Use according to Claim 26, characterized in that the said polyester is treated to increase its crystallinity above 40%.

28. Use according to one of Claims 26 and 27, characterized in that the polyester in polymerized form is first of all biaxially stretched and then, after annealing to release the stresses induced, is given the final shape.

29. Use according to Claim 28, characterized in that the polyester is annealed by the hot mould technique.

30. Use according to Claim 28, characterized in that the polyester is annealed by softening the biaxially stretched product.

31. Use of aromatic polyesters for resisting the fixation of organic compounds, especially contaminants, characterized in that the said aromatic polyesters have an average degree of crystallinity of higher than 30%.

32. Use according to Claim 31, characterized in that the said aromatic polyesters have an average degree of crystallinity of higher than 40%.

33. Use according to one of Claims 31 and 32, characterized in that the aromatic polyesters in polymerized form are first of all biaxially stretched and then, after annealing to release the stresses induced, are given the final shape.

34. Use according to Claim 33, characterized in that the polyesters are annealed by the hot mould technique.

35. Use according to Claim 33, characterized in that the aromatic polyesters are annealed by softening the biaxially stretched product.

36. Use according to one of Claims 31 to 35, characterized in that the aromatic polyester is polyethylene terephthalate.
